# EUROPÄISCHE PATENTSCHRIFT

(11) **EP 1 089 923 B1**
(45) Veröffentlichungstag und Bekanntmachung des Hinweises auf die Patenterteilung: **30.07.2003**
(21) Anmeldenummer: 00925069.7
(22) Anmeldetag: 10.04.2000
(51) Int. Cl.: B65D 81/00

(54) **SCHOCKABSORBIERENDE VORRICHTUNG FÜR PRÄZISIONSINSTRUMENTE**
SHOCK-ABSORBENT DEVICE FOR PRECISION INSTRUMENTS
DISPOSITIF AMORTISSEUR POUR INSTRUMENTS DE PRECISION

(30) Priorität: 09.04.1999 DE 19916128
(43) Veröffentlichungstag der Anmeldung: 11.04.2001
(73) Patentinhaber: Prüftechnik Dieter Busch AG, 85737 Ismaning (DE)
(72) Erfinder: BUSCH, Dieter, D-85737 Ismaning (DE)
(86) Internationale Anmeldenummer: DE0001084
(87) Internationale Veröffentlichungsnummer: WO00061453

(56) Entgegenhaltungen:
- US-A- 5 180 060
- US-A- 5 624 035
- US-A- 5 647 924
- US-A- 5 755 329

## Beschreibung

Die Erfindung betrifft eine schock- und stossabsorbierende Vorrichtung für Präzisionsinstrumente, insbesondere solche, die eine oder mehrere Winkellagen oder Orientierungen eines Gegenstandes relativ zu einem feststehenden oder beweglichen Koordinatensystem ermitteln sollen.

Eine solche Vorrichtung ist bekannt aus der US 3,952,980 mit dem Titel "Translatory shock absorber for attitude sensors".

Diese Vorrichtung verwendet ein elastisches Element, welches mittels einer Parallelführung im wesentlichen in eine Richtung hin- und herschwingen kann und dabei bedämpfbar ist. Gleichzeitig ist senkrecht zu dieser Bewegungsrichtung eine zusätzliche, jedoch weniger weiche stossmindernde Federwirkung vorgesehen.

Als schockabsorbierendes Element für drei senkrecht aufeinanderstehende Stoss-Richtungen ist die genannte Vorrichtung jedoch relativ grossvolumig und nicht für solche Anwendungen zu gebrauchen, bei denen es auf grösstmögliche Elastizität bei kleinsten Abmessungen eines stossabsorbierenden Elementes ankommt. Dieses Problem tritt insbesondere bei der Verwendung und Benutzung von Kreiselinstrumenten auf Laserbasis auf, insbesondere bei sog. Ringlaser-Kreiseln, welche leider sehr leicht durch geringfügigere Stosseinwirkungen beschädigt oder zerstört werden können.

Aufblasbare Stossschutzelemente sind aus der US 5 755 329 A bekannt.

Das genannte Problem wird mit der vorliegenden Erfindung gemäß Anspruch 1 gelöst.

Diese sieht vor, ein z.B. in einem Gehäuse befindliches Präzisionsinstrument, insbesondere in Form eines Laser-Gyroskops (Laser-Kreisels) dadurch zu schützen, dass eine einfachere Stosssicherung z.B. nach Art einer Schaumstoff-Polsterung vorgesehen ist, welche es gestattet, ein entsprechendes Präzisionsinstrument auf einem Arbeitstisch, auf einem zu vermessenden Gegenstand oder dgl. bestimmungsgemäss abzulegen. Darüberhinaus ist gemäss der Erfindung vorgesehen, in Kombination und zusätzlich mit dieser erstgenannten, einfacheren Stosssicherung ein oder mehrere luftpolsterartige Stossschutzelemente zu verwenden. Die luftpolsterartigen Stosschutzelemente sind dabei bevorzugt an den äusseren Seiten des Gehäuses eines zugehörigen Instrumentes angebracht und können bei Bedarf mittels eines geeigneten Gas-Generators zur Inflation gebracht werden.
Der genannte Bedarf wird mittels mechanischer oder elektronisch wirkender Sensoren und unter Zuhilfenahme einer Elektronik festgestellt, z.B. mittels Schaltern oder Inertialsensoren.
Die Erfindung sieht speziell vor, einen pyrotechnischen Gasgenerator vorzusehen, welcher einen erforderlichen Inflationsvorgang in weniger als z.B. einer Millisekunde bewirken kann. Alternativ kann der Gasgenerator von einem unter hohem Druck stehenden CO2-Vorrat gespeist werden.
Um zu verhindern, dass das Präzisionsinstrument bereits durch den Inflationsvorgang des luftpolsterartigen Stosschutzelementes einen ungewünschten Zusatz-Stoss erfährt, ist vorgesehen, dass zwischen der Gehäusewand und einem luftpolsterartigen Stosschutzelement eine elastische und stossmindernde Schicht vorgesehen ist, so dass eine sehr schnell erfolgende Inflation des Stosschutzelementes keine Beschädigung des Instrumentes verursachen kann.
Gemäss der Erfindung wird es bevorzugt, die Aktivierung des Gasgenerators dann vorzunehmen, wenn das Präzisionsinstrument einen Schwerkraftwert von etwa 0 G registriert, sich also in einem freien Fall befindet.
Ebenso soll die Aktivierung des Gasgenerators mit dem Zweck der Inflation des luftpolsterartigen Stosschutzelementes dann stattfinden, wenn von zwei vorhandenen Schaltern keiner aktiviert ist - hierbei ist vorgesehen, dass einer der beiden genannten Schalter ein solcher ist, welcher bei Auflage des Präzisionsinstrumentes auf einem Tisch oder einer anderen vorgesehenen Ablage aktiviert (z.B. geschlossen) wird, und dass der andere der beiden genannten Schalter z.B. ein sog. Taster ist, welcher während des Transports des Präzisionsinstrumentes durch eine Bedienperson solange betätigt werden soll, bis dieses auf einer vorgeshenen Ablage aufgelegt ist.
Um zu verhindern, dass bei einer fehlerhaften Betätigung des hier vorgestellten Sicherheitsmechanismus eine Verletzung der Hände durch das plötzlich expandierende Stosschutz-Element verursacht wird, soll das pyrotechnische Element von relativ geringer Brisanz sein, d.h. weniger stark wirken, als dies in den sog. Airbags von PKWs der Fall ist.

Die Erfindung betrifft also eine Schutzeinrichtung für stossempfindliche Messgeräte, insbesondere für Messkreisel und ist dadurch gekennzeichnet, dass in eine Referenz- oder Aussenfläche eines solchen Messgerätes ein oder mehrere Airbags eingelassen sind, welche bei einem Fall-Vorgang automatisch ausgelöst werden. Es können einer oder mehrere solcher Airbags vorgesehen sein, die auf eine oder mehrere Seitenflächen eines zu schützenden Instruments verteilt sind.
Bevorzugt werden die Airbags durch pyrotechnische Gasgeneratoren gefüllt. Eine Auslösung der Airbags oder eine Aktivierung vorhandener Gasgeneratoren kann auch durch Beschleunigungsaufnehmer erfolgen, wenn diese eine sehr hohe oder sehr niedrige absolute Beschleunigung feststellen. Mit Vorteil erfolgt eine Auslösung eines oder aller Gasgeneratoren dann, wenn eine Bedienperson den Handkontakt zu allen für die Handhabung erforderlichen Handgriffen verliert und durch eine elektronische Schaltung festgestellt wurde, dass das Instrument nicht bestimmungsgemäss abgelegt worden ist. Die bestimmungsgemässe Ablage kann beispielsweise durch Mikroschalter registriert werden. Die Schutzeinrichtung wird in bevorzugter Weise ergänzt durch einen stossabsorbierenden Mantel um das Gehäuse eines vor Stoss zu schützenden Messgerätes, welcher z.B. aus einem gummi- oder schaumstoffartigen Elastomer bestehen kann. Als weitere Schutzmassnahme kann eine ergänzende Vorrichtung in Betracht kommen, welche eine Referenz- oder Anlegefläche durch eine oder mehrere Schutzkappen sichert, welche normalerweise etuiförmig aufgeklappt sind und während eines Fall-Vorganges durch Federkraft, einen Servomotor, einen Gasgenerator oder durch eine andere geeignete Vorrichtung geschlossen werden.

Die Erfindung wird im folgenden anhand der Zeichnung erläutert.

Diese zeigt in
- Fig. 1: die grundsätzliche Anordnung erfindungsgemässer Stoßschützelemente
- Fig. 2: in symbolischer Darstellung einen Airbag als Stoßschutzelement, mit angedeuteter pyrotechnischer Inflationseinheit
- Fig. 3: den zeitlichen Verlauf eines Kraft- oder Beschleunigungssignals sowie einen Triggerzeitpunkt
- Fig. 4: eine Ausführungsform der Erfindung mit diversen Betätigungsschaltern
- Fig. 5: eine Ausführungsform der Erfindung mit zusätzlichen, permanent wirkenden Soßschutzelementen in Form von Stoßpolstern

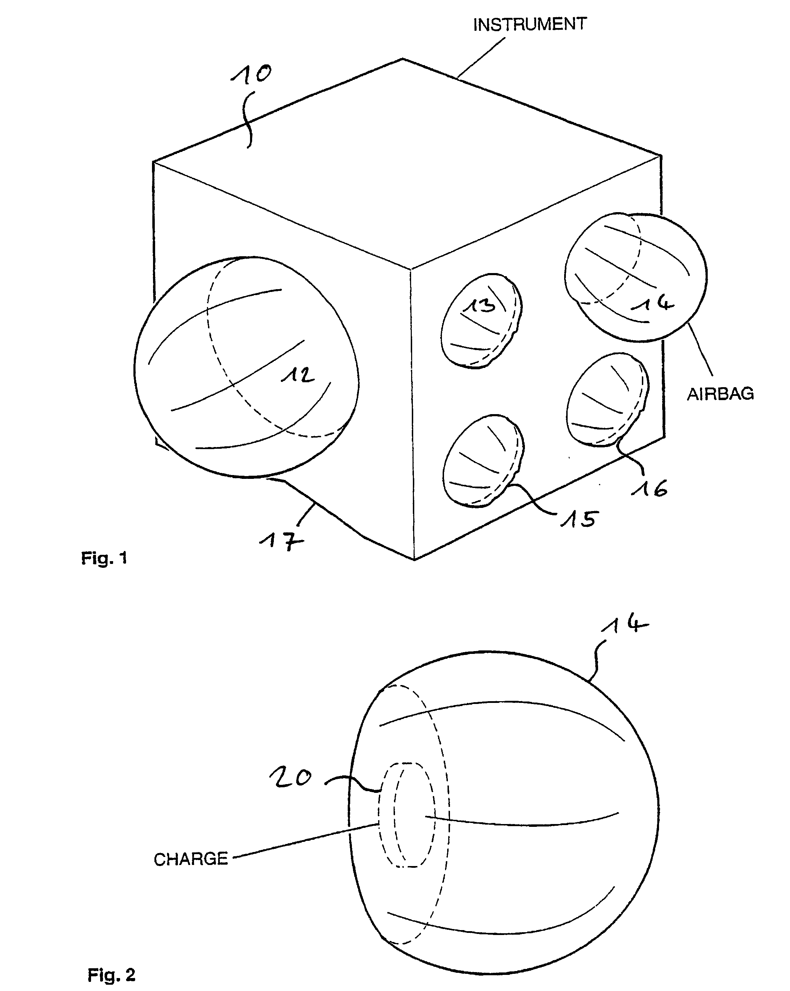

Wie in Fig. 1 gezeigt, kann das Gehäuse 10 für das Präzisionsinstrument beispielsweise würfelförmig sein und ein mechanisches Prisma 17 aufweisen, so dass das Gehäuse nicht nur auf einen ebenen zu vermessenden Gegenstand gesetzt werden kann, sondern genausogut auf einen zylindrischen Körper. An einer oder mehreren zu schützenden Seitenflächen des Gehäuses sind inflatierbare Stoßschutzvorrichtungen 12, 13, 14, 15, 16 angebracht, von denen Stoßschutzvorrichtungen 12 und 14 voll inflatiert dargestellt sind, wohingegen die durch Bezugsziffern 13, 15, 16 dargestellten erst anteilig mit einem Gas gefüllt sind, oder noch im ungetriggerten Zustand sind. Wie aus der Zeichnung hervorgeht, sollen die Stoßschutzvorrichtungen bevorzugt in einer Ausführungsform "Airbag" realisiert sein und weisen somit eine eher dünne Aussenhaut auf, welche im inflatierten Zustand ein gasgefülltes Volumen umschliessen soll. In Fig. 2 wird schematisch gezeigt, wie eine zugehörige pyrotechnische Einrichtung 20 ("Charge") relativ zu einer Aussenhaut eines Airbags 14 angeordnet sein kann.

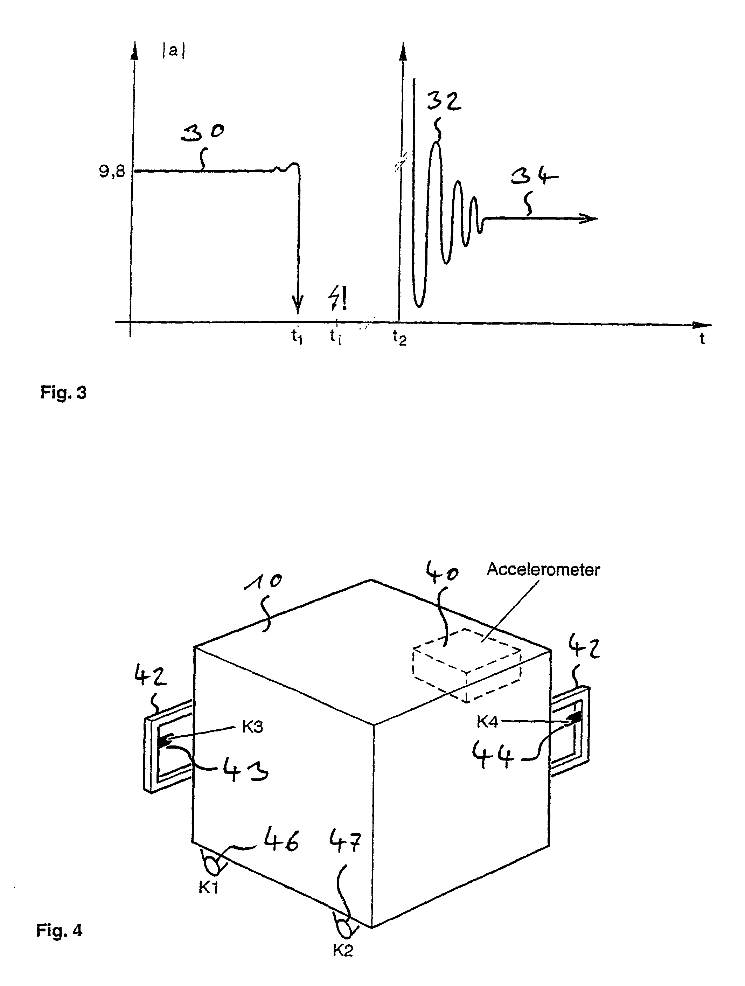

Aus Fig. 3 ist ersichtlich, unter welchen Randbedingungen die Inflation eines oder mehrerer gasgefüllter Stoßschutzvorrichtungen ("Airbags".) initiiert werden kann. Zu diesem Zweck wird durch eine im Gehäuse 10 vorgesehene, z.B. batteriebetriebene Elektronik (nicht gezeigt) das Signal eines oder mehrerer Accelerometer 40 (in Fig. 4 gezeigt) registriert und zeitlich überwacht. Dementsprechend ist in Fig. 3 als Abszisse die Zeitachse aufgetragen, während als Ordinate der Betrag /a/ eines Beschleunigungssignales 30 wiedergegeben ist. Dieses ist in Ruhestellung des Gerätes z.B. der Wert der Erdbeschleunigung (typ. ca. 9,81 in metrischen Einheiten). Sofern das Meßinstrument durch fehlerhaftes Handling aus seinem Ruhe-Status in den Zustand einer Fallbewegung übergeht, ergibt sich ab einem Zeitpunkt t1 ein verschwindendes Beschleunigungssignal. Sofern dieses genügend lange anhält (einige Millisekunden), wird zu einem Zeitpunkt t(sub i) durch die genannte Elektronik ein Triggersignal abgegeben, welches die Inflation einiger oder aller Stoßschutzelemente 12 bis 16 hervorruft. Dies kann durch Zündung geeigneter Gasgeneratoren, oder durch Betätigung eines oder mehrerer elektromagnetisch arbeitender Ventile geschehen, welche ein unter Druck gehaltenes Gas zum Ausströmen in die Stoßschutzelemente freigeben. Auf diese Weise sind die Stoßschutzelemente zum Zeitpunkt t(sub 2) in genügender Weise inflatiert, so dass der zu erwartende Aufprall des Instrumentes 10 auf z.B. dem Fussboden nur noch eine limitierte, zunächst stark schwankende Beschleunigung 32 verursacht, welche nach kurzer Zeit sich auf einen konstanten Wert einpendelt, der je nach Orientierung des Gerätes relativ zur Senkrechten durch einen anderen, z.B. kleineren Messwert 34 gekennzeichnet ist.
In Fig. 4 sind in Haltegriffe 42 eingebaute Taster 43, 44 gezeigt sowie die am Gehäuse angebrachten Taster 46, 47. Solange das Präzisionsinstrument ordnungsgemäss auf einer Unterlage abgestellt ist, wird dies durch die Taster 46, 47 an die Elektronik signalisiert. Zum manuellen Transportieren des Präzisionsinstrumentes sind daher zumindest einer, ggf. beide Taster 43, 44 zu betätigen. Unter dieser Voraussetzung kann das Präzisionsgerät von seiner Unterlage gehoben werden, ohne dass es zu einer Initiierung oder Triggerung des Inflationsvorganges der Stoßschutzelemente kommt. Sollte versehentlich das Präzisionsinstrument in dieser Phase jedoch fallengelassen werden, würde die Kombination der Schalterstellungen jedoch von der Elektronik als Triggerbedingung erkannt werden, umgehend den Inflationsvorgang der Stoßschutzelemente einzuleiten.

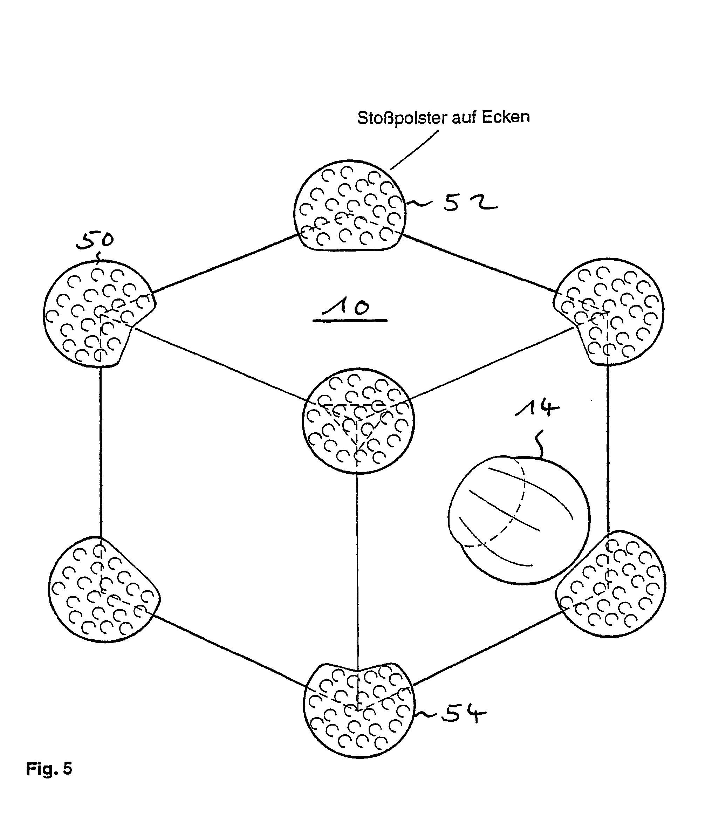

Wie in Fig. 5 gezeigt, kann die Anzahl der aktivierbaren Stoßschutzelemente 14 reduziert werden, wenn an den Ecken oder Kanten des Gehäuses 10 eine Anzahl als Polster oder Puffer wirkenden Stoßschutzelemente 50, 52, 54 vorgesehen werden.

Diese Stoßschutzelemente können aus einem elastischen material, zum Beispiel einem Schaumstoff oder einem Elastomer mit niedriger Shore-Härte gefertigt sein. Es kann sich dabei aber auch um ständig mit Gas oder Luft gefüllte ballonartige Vorrichtungen handeln. In einer besonderen Ausführungsform der Erfindung wird die Anzahl der Stoßschutzelemente auf ein Minimum beschränkt.

## Patentansprüche

1. Schock- und stossabsorbierende Vorrichtung für Präzisionsinstrumente, **dadurch gekennzeichnet,**
**dass** ein oder mehrere luftpolsterartige Stosschutzelemente an der Aussenseite eines in einem Gehäuse (10) befindlichen Präzisionsinstrumentes vorgesehen sind, wobei die Stoßschutzelemente nach Massgabe einer Trigger-Bedingung mittels eines Gas-Generators zur Inflation gebracht werden können.

2. Vorrichtung nach Anspruch 1, **dadurch gekennzeichnet, dass** die Stosschutzelemente an zumindest einer äusseren Seitenfläche oder einer Kante des Gehäuses (10) eines vor Stoss zu schützenden Präzisionsinstrumentes angebracht sind.

3. Vorrichtung nach einem der vorhergehenden Ansprüche, **dadurch gekennzeichnet, dass** das zu schützende Präzsionsinstrument ein mehrachsig wirkendes Präzisions-Winkelmessgerät in Form eines Gyroskops ist.

4. Vorrichtung nach einem der vorhergehenden Ansprüche, **dadurch gekennzeichnet, dass** der Gas-Generator auf pyrotechnischer Basis arbeitet oder aus einem Druckgasvorrat, insbesondere einem CO2-Vorrat, gespeist wird.

5. Vorrichtung nach einem der vorhergehenden Ansprüche, **dadurch gekennzeichnet, dass** der Gas-Generator aktiviert wird, wenn eine verschwindende Gravitationsbeschleunigung an dem zu schützenden Präzisionsinstrument registriert wird, oder wenn manuell und per Gewichtskontakt zu betätigende Sicherheitsvorkehrungen gleichzeitig einen deaktivierten Status aufweisen.

6. Vorrichtung nach einem der vorhergehenden Ansprüche, **gekennzeichnet durch** eine Mikroelektronik zur Erfassung von Signalen oder Parametern, welche vermittels eines gespeicherten Programmes überprüft werden, ob eine Triggerbedingung vorliegt, und welche gegebenenfalls einen Trigger-Impuls auslöst, **durch** welchen der Gas-Generator in unverzüglicher Weise aktiviert wird.

7. Vorrichtung nach einem der vorhergehenden Ansprüche, **dadurch gekennzeichnet, dass** eine zusätzliche Stosschutzvorrichtung vorhanden ist, welche aus einem oder mehreren Polsterstücken besteht, die an den Aussenflächen des Gehäuses eines zu schützenden Instrumentes angebracht sind.

## Claims

1. Shock-absorbent and impact-absorbent device for precision instruments, **characterized in that** one or more impact prevention elements like air cushions are provided on the outside of a precision instrument located in an enclosure (10), it being possible for the impact prevention elements to be inflated by means of a gas generator in accordance with a trigger condition.

2. Device according to Claim 1, **characterized in that** the impact prevention elements are fitted to at least one outer side surface or one edge of the enclosure (10) of a precision instrument to be protected against impact.

3. Device according to one of the preceding claims, **characterized in that** the precision instrument to be protected is a precision angle measuring instrument acting on multiple axes in the form of a gyroscope.

4. Device according to one of the preceding claims, **characterized in that** the gas generator operates on a pyrotechnical basis or is fed from a compressed gas supply, in particular a CO₂ supply.

5. Device according to one of the preceding claims, **characterized in that** the gas generator is activated if a vanishing acceleration due to gravity is registered on the precision instrument to be protected, or if safety precautions to be activated manually and by weight contact simultaneously exhibit a deactivated status.

6. Device according to one of the preceding claims, **characterized by** microelectronics for registering signals or parameters, which are checked by means of a stored programme to see whether there is a trigger condition present and which, if appropriate, trigger a trigger pulse by means of which the gas generator is activated immediately.

7. Device according to one of the preceding claims, **characterized in that** there is an additional impact prevention device, which comprises one or more pieces of padding which are fitted to the outer surfaces of the enclosure of an instrument to be protected.

## Revendications

1. Dispositif amortisseur pour des instruments de précision, **caractérisé en ce qu'**il est prévu un ou plusieurs éléments de protection contre les chocs sous forme de coussins d'air sur le côté extérieur d'un instrument de précision se trouvant dans une enceinte (10), dans lequel les éléments de protection contre les chocs peuvent être amenés à se gonfler au moyen d'un générateur de gaz en fonction d'une condition de déclenchement.

2. Dispositif selon la revendication 1, **caractérisé en ce que** les éléments de protection contre les chocs sont placés sur au moins une face latérale extérieure ou sur une arête de l'enceinte (10) d'un instrument de précision à protéger contre les chocs.

3. Dispositif selon l'une quelconque des revendications précédentes, **caractérisé en ce que** l'instrument de précision à protéger est un instrument de précision de mesure des angles opérant selon plusieurs axes sous la forme d'un gyroscope.

4. Dispositif selon l'une quelconque des revendications précédentes, **caractérisé en ce que** le générateur de gaz opère sur une base pyrotechnique ou est alimenté à partir d'un réservoir de gaz comprimé, en particulier à partir d'un réservoir de CO₂.

5. Dispositif selon l'une quelconque des revendications précédentes, **caractérisé en ce que** le générateur de gaz est activé lorsqu'une disparition de l'accélération gravitationnelle est enregistrée sur l'instrument de précision à protéger, ou lorsque des équipements de sécurité à activer manuellement ou par contact pondéral présentent en même temps un état désactivé.

6. Dispositif selon l'une quelconque des revendications précédentes, **caractérisé par** une micro-électronique destinée à détecter des signaux ou des paramètres, qui sont contrôlés au moyen d'un programme mémorisé, pour déterminer s'il existe une condition de déclenchement, et qui émet le cas échéant une impulsion de déclenchement, par laquelle le générateur de gaz est activé sans retard.

7. Dispositif selon l'une quelconque des revendications précédentes, **caractérisé en ce qu'**il est prévu un dispositif de protection supplémentaire contre les chocs, qui se compose d'une ou de plusieurs parties de coussin, qui sont placées sur les faces extérieures de l'enceinte d'un instrument à protéger.
